# EUROPEAN PATENT APPLICATION

(11) **EP 2 793 002 A1**
(43) Date of publication of application: **22.10.2014**
(21) Application number: 13305501.2
(22) Date of filing: 17.04.2013
(51) Int. Cl.: G01D 11/24

(54) **Sensor unit with housing comprising a cable feedthrough with claws for clamping the cable**

(71) Applicant: Aktiebolaget SKF, 41 550 Göteborg (SE)
(72) Inventor: Tersteeg, Pascal, 3436 ZP Nieuwegein (NL); Taillepied, Alexandre, 37700 St Pierre des Corps (FR); Prinz, Matthias, 73650 Winterbach (DE)
(74) Representative: Myon, Gérard Jean-Pierre

(57) **Abstract**

This sensor unit (8) for sensing the angular position of a rotatable element (4) with respect to a non-rotatable element (2) comprises an encoder (82) fast in rotation with the rotatable element (4), a sensor body (84) fixed with respect to the non-rotatable element (2), including at least one sensing element adapted to sense the angular position of the encoder (82), a casing (85) in which the sensor body (84) is housed, and an output cable (94) for transmitting sensing data to a reception device. The casing (85) comprises a protruding portion (850) extending radially outwards from an outer peripheral wall (86) of the casing (85), said protruding portion (850) being adapted to accommodate the output cable (94). The protruding portion (850) comprises at least one claw (860a, 860b) which surrounds and clamps the output cable (94).

## Description

### TECHNICAL FIELD OF THE INVENTION

The present invention concerns a sensor unit for sensing the angular position of a rotatable element with respect to a non-rotatable element. The invention also concerns an instrumented bearing comprising a rolling bearing and such a sensor unit.

### BACKGROUND OF THE INVENTION

Instrumented bearings are equipped with sensor units which generally comprise an output cable connected to a printed circuit board of the sensor unit and adapted to transmit sensing data to a reception device. The output cable generally includes several electrical wires, which are connected to the printed circuit board, typically by soldering. The wires are protected by a sheath, and an encapsulation covers and protects the connections.

Such output cables can be pulled due to shocks, vibrations or handling mistakes, resulting in damages on the connections or in the encapsulation being pulled off, leaving the wires uncovered. When the encapsulation moves away, the tightness of the output cable is lost and water or exterior particles can get in contact with the electrical wires.

### SUMMARY OF THE INVENTION

The aim of the invention is to provide a new sensor unit, whose structure better protects the output cable.

To this end, the invention concerns a sensor unit for sensing the angular position of a rotatable element with respect to a non-rotatable element, the sensor unit comprising an encoder fast in rotation with the rotatable element, a sensor body fixed with respect to the non-rotatable element, including at least one sensing element adapted to sense the angular position of the encoder, a casing in which the sensor body is housed, an output cable for transmitting sensing data to a reception device, the casing comprising a protruding portion extending radially outwards from an outer peripheral wall of the casing, said protruding portion being adapted to accommodate the output cable. This sensor unit is **characterized in that** the protruding portion comprises at least one claw which surrounds and clamps the output cable.

Thanks to the invention, the output cable is firmly retained in position by the claw of the protruding portion, and a pulling force that would be exerted on the output cable is mechanically transmitted to the casing. This prevents the output cable from being pulled away and damaged.

According to further aspects of the invention, which are advantageous but not compulsory, such a sensor unit may include one or several of the following features:
- The protruding portion comprises four claws, these four claws being formed by two pair of claws extending respectively from a first and a second edges of the protruding portion with respect to the longitudinal axis of the output cable.
- The claws of each pair of claws are alternated along the longitudinal axis of the output cable.
- The claws are produced in an initially flat shape, then deformed to match the outer shape of the output cable.
- The claws are adapted to sink in a sheath of the output cable.
- The protruding portion is made in one piece with the casing.
- The claws extend perpendicular to the longitudinal axis of the output cable.
- The claws are adjacent to each other when deformed around the output cable.
- The protruding portion has a proximal portion adapted to accommodate an end of the output cable which is connected to the sensor body and a distal portion adapted to accommodate a part of the output cable, whereas the claws are formed on the distal portion.
- The protruding portion has a proximal portion adapted to accommodate an end of the output cable which is connected to the sensor body and a distal portion adapted to accommodate a part of the output cable, whereas the claws are formed on the proximal portion.

The invention also concerns an instrumented bearing comprising a rolling bearing and a sensor unit as mentioned here-above.

The invention will now be explained in correspondence with the annexed figures, as an illustrative example. In the annexed figures:
- figure 1 is a perspective view of an instrumented bearing according to the invention;
- figure 2 is a perspective view, from a different angle, of the instrumented bearing of figure 1;
- figure 3 is a perspective view of a portion of a sensor unit according to the invention which belongs to the instrumented bearing of figures 1 and 2, some claws of a casing of the sensor unit being in a non-deformed configuration;
- figure 4 is a perspective view, from an angle similar to the one of figure 2, of the sensor unit of figure 3.

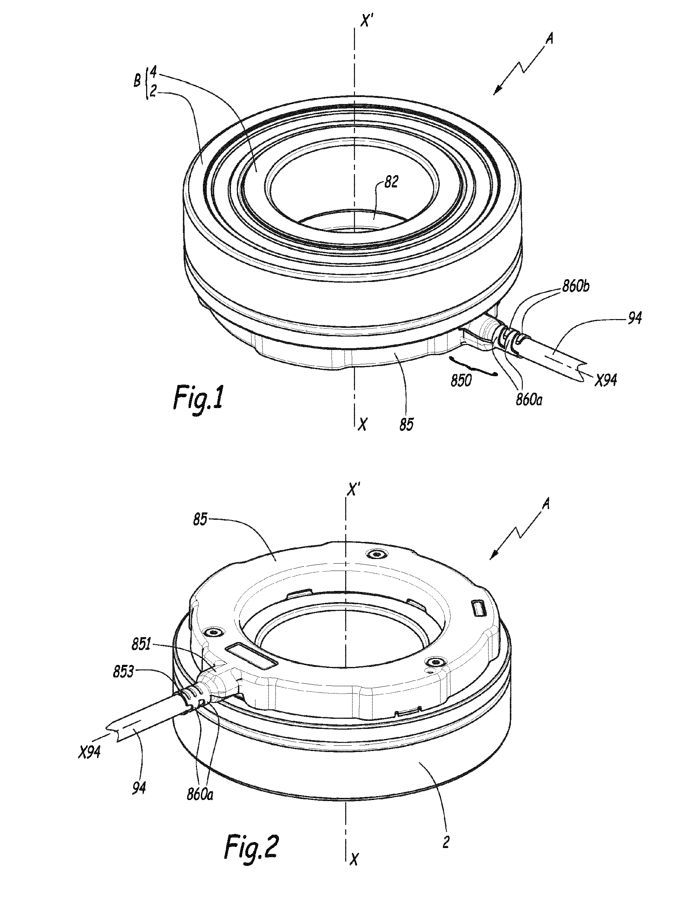

An instrumented bearing A is represented on figures 1 to 4. Instrumented bearing A comprises a bearing B which includes an outer ring 2 forming a non-rotatable element, an inner ring 4 forming a rotatable element, and non-shown rolling elements arranged between outer ring 2 and inner ring 4. Rolling bearing B has a rotation axis X-X'.

Instrumented bearing A also includes a sensor unit 8, which comprises an encoder 82, which is fast in rotation with inner ring 4. Sensor unit 8 also includes a sensor body 84, which has an annular shape centered on axis X-X'. Sensor body 84 is preferably a synthetic material body in which at least one non-shown sensing element is embedded. The sensing element is fixed with respect to outer ring 2 and adapted to detect magnetic field variations generated by the rotation of encoder 82 around axis X-X'. Sensor body 84 is fast in rotation with outer ring 2.

Sensor body 84 also includes a non-shown printed circuit board to which the sensing element is connected. Sensor body 84 is housed in a casing 85 of sensor unit 8. Casing 85 is preferably made of a metallic material, such as steel.

Sensor unit 8 comprises an output cable 94, which comprises several electrical wires assembled together within an insulating sheath. For the sake of clarity, the wires are not represented on the figures. Output cable 94 is connected to sensor body 84 by an end 94a, which is adapted to fit in a slot of a cylindrical wall 84a of sensor body 84. End 94a is preferably a synthetic material body in which the wires of output cable 94 are soldered to non-shown connecting pins. Alternatively, the wires can be connected to sensor body 84 by any other appropriate means such as crimping or splicing, thanks to a connection face or a conductor pad.

According to a non-shown alternative, output cable 94 may be connected to sensor body 84 by any other adapted connection means.

Casing 85 comprises a radially outwards protruding portion 850, adapted to accommodate a part of output cable 94. Protruding portion 850 has a substantially tubular shape centred on a longitudinal axis which corresponds to the longitudinal axis X94 of output cable 94. Protruding portion 850 comprises a proximal portion 851 located on the side of an outer peripheral wall 86 of casing 85, and a distal portion 853. Protruding portion 850 has the shape of a half tube sectioned along a medial plane which comprises longitudinal axis X94. An axial edge 86a of outer peripheral wall 86 is continuous with an edge 855 of protruding portion 850 located on a first side of axis X94, and a second edge 857 of protruding portion 850 located on the other side of longitudinal axis X94. The inner diameter of proximal portion 851 is superior to the diameter of distal portion 853, so as to accommodate end 94a. The inner diameter of distal portion 853 corresponds to the outer diameter of output cable 94.

In order to secure output cable 94 to casing 85, protruding portion 850 comprises, on distal portion 853, several claws 860 which extend from edges 855 and 857 and surround output cable 94 so as to clamp it. Casing 85 comprises two claws 860a extending from edge 855, and two claws 860b extending from edge 857. Claws 860a and 860b extend perpendicularly to axis X94 and are adapted to sink in the sheath of output cable 94, so that they provide a resistive force against a pulling force exerted in any direction which tends to separate output cable 94 from sensor body 84. Consequently, in the case a pulling force is exerted on output cable 94, this pulling force is mechanically transmitted to casing 85 by claws 860a and 860b. This permits casing 85 to withstand the pulling force, instead of output cable 94 itself.

Claws 860a and 860b are alternated along axis X94. Claws 860a and 860b are adjacent to each other so that the respective tips of claws 860a and claws 860b are in the vicinity of axial edges 855 and 857 when the claws are bent around output cable 94.

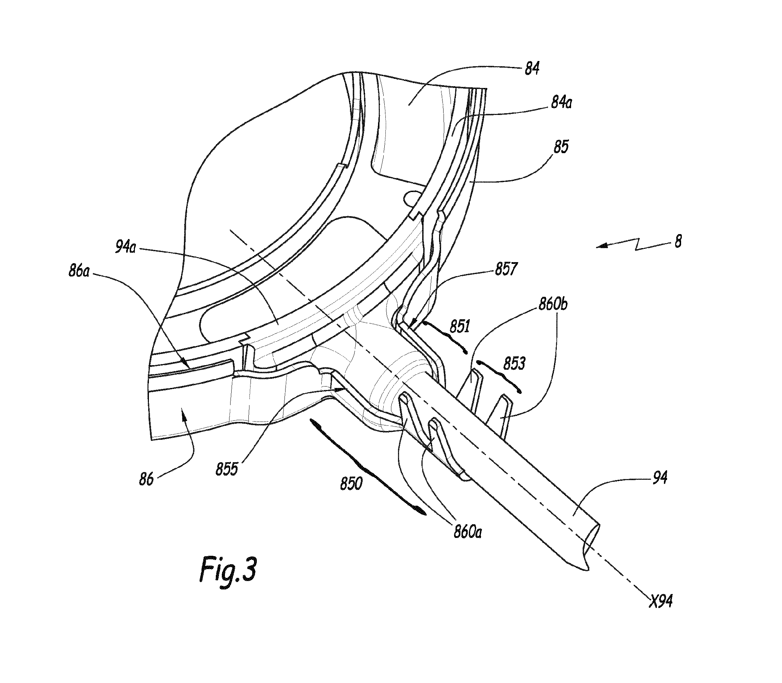

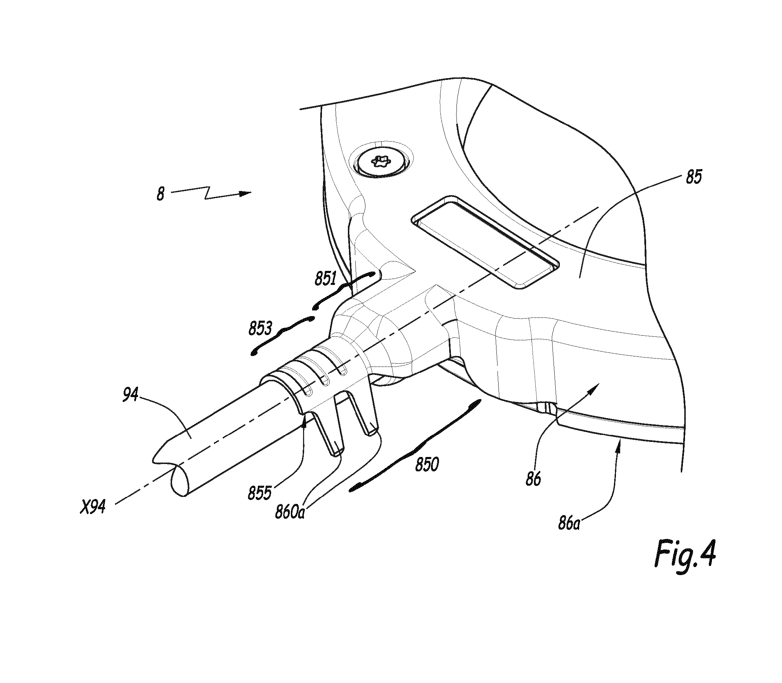

Claws 860a and 860b are made in one piece with casing 85. As represented on figures 3 and 4, in which claws 860a and 860b are in a non-deformed state, claws 860a and 860b are produced with an initially flat shape extending tangentially to protruding portion 850 from axial edges 855 and 857. When sensor unit 8 is assembled, output cable 94 is inserted in distal portion 853 between claws 860a and 860b. Claws 860a and 860b are then bent towards each other and deformed around output cable 94 to match the outer shape of output cable 94, with an adapted tooling, so that they clamp output cable 94 in protruding portion 850.

According to an alternative embodiment, protruding portion 850 may comprise one claw protruding from each side of distal portion 853, or more than two claws extending from each side of distal portion 853.

According to an another non-shown alternative embodiment, protruding portion 850 may comprise only one claw 860 extending from either side of distal portion 853.

According to another non shown embodiment, claws 860a and 860b may not be adjacent to each other along axis X94 but have their tips facing each other.

Claws 860a and 860b are represented as having a substantially triangular shape. According to another non-shown embodiment, claws 860a and 860b may have a different shape, such as a rectangular shape.

According to another non-shown embodiment, casing 85 may comprise claws located on proximal portion 851.

According to another non-shown embodiment, protruding portion 850 is not integrally formed with the casing 85, and both parts can be joined together for instance by welding or crimping.

## Claims

1. Sensor unit (8) for sensing the angular position of a rotatable element (4) with respect to a non-rotatable element (2), the sensor unit (8) comprising:
- an encoder (82) fast in rotation with the rotatable element (4),
- a sensor body (84) fixed with respect to the non-rotatable element (2), including at least one sensing element adapted to sense the angular position of the encoder (82),
- a casing (85) in which the sensor body (84) is housed,
- an output cable (94) for transmitting sensing data to a reception device, the casing (85) comprising a protruding portion (850) extending radially outwards from an outer peripheral wall (86) of the casing (85), said protruding portion (850) being adapted to accommodate the output cable (94), wherein said protruding portion (850) comprises at least one claw (860a, 860b) which surrounds and clamps the output cable (94).

2. Sensor unit according to claim 1, wherein said protruding portion (850) comprises four claws (860a, 860b), these four claws being formed by two pair of claws (860a, 860b) extending respectively from a first (855) and a second (857) edges of the protruding portion (850) with respect to the longitudinal axis (X94) of the output cable (94).

3. Sensor unit according to claim 2, wherein the claws (860a, 860b) of each pair of claws are alternated along the longitudinal axis (X94) of the output cable (94).

4. Sensor unit according to any preceding claim, wherein the claws (860a, 860b) are produced in an initially flat shape, then deformed to match the outer shape of the output cable (94).

5. Sensor unit according to any preceding claim, wherein the claws (860a, 860b) are adapted to sink in a sheath of the output cable (94).

6. Sensor unit according to any preceding claim, wherein the protruding portion (850) is made in one piece with the casing (85).

7. Sensor unit according to any preceding claim, wherein the claws (860a, 860b) extend perpendicular to the longitudinal axis (X94) of the output cable (94).

8. Sensor unit according to any preceding claim, wherein the claws (860) are adjacent to each other when deformed around the output cable (94).

9. Sensor unit according to any preceding claim, wherein the protruding portion (850) has a proximal portion (851) adapted to accommodate an end (94a) of the output cable (94) which is connected to the sensor body (84) and a distal portion (853) adapted to accommodate a part of the output cable (94) and wherein the claws (860a, 860b) are formed on the distal portion (853).

10. Sensor unit according to any of claims 1 to 8, wherein the protruding portion (850) has a proximal portion (851) adapted to accommodate an end (94a) of the output cable (94) which is connected to the sensor body (84) and a distal portion (853) adapted to accommodate a part of the output cable (94) and wherein the claws (860a, 860b) are formed on the proximal portion (851).

11. Instrumented bearing (A) comprising a rolling bearing (B) and a sensor unit (8) according to one of the previous claims.
